(19) **Europäisches Patentamt**

**European Patent Office**

**Office européen des brevets**

(11) **EP 1 357 380 A1**

(12) **EUROPÄISCHE PATENTANMELDUNG**

(43) Veröffentlichungstag:
29.10.2003 Patentblatt 2003/44

(51) Int Cl.7: **G01N 27/83**

(21) Anmeldenummer: 02009151.8

(22) Anmeldetag: 24.04.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **NP Inspection Services GmbH**
**31137 Hildesheim (DE)**

(72) Erfinder:
- **Krivoi, Guennadi Dr.**
**D-12526 Berlin (DE)**
- **Kallmeyer, Johannes Peter**
**D-31188 Holle OT Silium (DE)**

(74) Vertreter: **Becker Kurig Straus**
**Patentanwälte**
**Bavariastrasse 7**
**80336 München (DE)**

(54) **Prüfverfahren und Prüfvorrichtung zur Erkennung von Ungleichmässigkeiten in der Wandstärke von ferromagnetischen Rohren**

(57)   Die Erfindung betrifft ein Prüfverfahren zur Erkennung von Ungleichmäßigkeiten in der Wandstärke ferromagnetischen Rohren, wobei ein elektrischer Strom bestehend aus mehreren harmonischen Komponenten durch das zu prüfenden Rohr (22) geleitet wird und das von ihm erzeugte Magnetfeld außerhalb des Rohres gemessen wird. Dabei wird das Spektrum des Stromes gemessen, und von dem gemessen Magnetfeld auch das Spektrum erfasst wird. Danach werden die Verhältnisse zwischen gleichen spektralen Komponenten des Stromes und des Magnetfeldes ausgewertet. Weiter betrifft die Erfindung eine Prüfvorrichtung, insbesondere zur Durchführung des Prüfverfarens, aufweisend eine Stromquelle (14) zur Speisung des zu prüfenden Rohres (22) mit einem Strom bestehend aus meheren harmonischen Komponenten, eine Strommesseinrichtung (15) zur Messung und Aufnahme der momentanen Stromwerte, eine Stromspektrum-Auswertungseinrichtung (16) zur Erfassung der harmonischen Komponenten des Stromes, mindestens ein Magnetfeldsensor (17) zur Messung und Aufnahme der momentanen Werte des durch den Strom erzeugten Magnetfeldes außerhalb des Rohres, eine Magnetfeldspektrum-Auswertungseinrichtung (18) zur Erfassung der harmonischen Komponenten des Magnetfeldes, eine Auswertungseinrichtung (19) zum Vergleich und Analyse der spektralen Werte des Magnetfeldes und des Stromes.

Fig. 6

EP 1 357 380 A1

**Beschreibung**

Die vorliegende Erfindung betrifft ein Prüfverfahren zur Erkennung von Ungleichmäßigkeiten in der Wandstärke von ferromagnetischen Rohren sowie eine Vorrichtung insbesondere zur Durchführung des Prüfverfahrens.

In der Erdöl- und Erdgasindustrie werden Stahlrohre in großer Anzahl für den Produkttransport verwendet. Normalerweise sind es ferritische Stähle, welche ausgeprägte ferromagnetische Eigenschaften aufweisen. Unter dem Einfluss von Außen- bzw. Innenfaktoren entsteht Korrosion bzw. eine Wandstärkeverminderung der Rohre. Dies kann zu Produktverlusten und in Folge davon zu Umweltschäden führen. Zur Vorbeugung werden die Rohre regelmäßig geprüft, um Wandstärkeänderungen rechtzeitig aufzuspüren. Heutzutage werden dazu folgende Verfahren bzw. Geräte verwendet: (i) sogenannte intelligente Molche und (ii) sogenannte NoPig-Verfahren. Intelligente Molche sind z.B. in "Non-destructive Testing Handbook, 2nd Ed., Vol. 10, Non-destructive Testing Overview, American Society for Non-destructive Testing, 1996, S. 252" beschrieben. Ein solcher intelligenter Molch kann mit unterschiedlichen Sensoren ausgerüstet werden, z.B. für Ultraschall- bzw. Streumagnetflussprüfungen zur Bestimmung der aktuelle Wandstärke entlang des Rohres. Der Molch wird in das zu prüfende Rohr eingebracht und zusammen mit dem Produkt durch das Rohr gefahren. Die Messdaten werden in dem Speicher des Molches gesammelt und nach dem Herausnehmen aus dem Rohr ausgewertet.

Der Nachteil der intelligenten Molche ist die strenge Anforderung an Aufbau und Geometrie der zu prüfenden Rohre: z.B. das Vorhandensein von speziellen Schleusen zum Einführen bzw. Herausnehmen des Molches, scharfe Krümmungen, Beulen, Durchmesserdifferenzen wegen des Einsatzes von unterschiedlichen Rohrdurchmesser sind nicht erlaubt, etc. Damit ist der Einsatzbereich der Molche deutlich begrenzt. Praktisch ist er auf speziell für dieses Verfahren hergestellte Rohrleitungen begrenzt.

Das Patent US 4048558 betrifft ein Verfahren, bei dem ein Strom durch ein Metallrohr bei unterschiedlichen Frequenzen geleitet wird und die Impedanz des Rohres überwacht wird. Tritt eine Wandstärkeänderung im Rohr auf, soll sich die Impedanz ändern. Der Nachteil dieses Verfahrens ist die geringe Empfindlichkeit und die Problematik, dass die Defektstellen nicht lokalisiert werden können.

Die Offenlegungsschrift DE 19819066 A1 betrifft ein Prüfverfahren zur berührungslosen Erkennung von Ungleichmäßigkeiten in der Wanddicke von unzugänglichen metallischen Rohren. Dieses Verfahren sieht vor, dass elektrische Ströme unterschiedlicher Frequenz durch das Rohr geleitet werden und die von ihnen erzeugten Magnetfelder außerhalb des Rohres gemessen werden. Durch unterschiedliche Eindringtiefe der Magnetfelder im Rohr bei tiefen und höheren Frequenzen werden bei diesen Frequenzen die Magnetfelder außerhalb des Rohres auch unterschiedlich sein, wenn es sich um eine Defektstelle am Rohr handelt. Dies ist begründet durch die Abweichung der Querschnittsform des Rohres am Ort der Defektstelle von einer Kreisringform. Dabei wird die Stromverteilung im Querschnitt des Rohres bei unterschiedlichen Frequenzen auch unterschiedlich, so dass der Stromschwerpunkt der Stromverteilung nicht unbedingt auf der Symmetrie-Achse des Rohres liegt. Dies verursacht die entsprechende Änderung des Magnetfeldes außerhalb des Rohres. Oberhalb eines Rohrabschnitts ohne Defekt werden die Magnetfelder außerhalb des Rohres bei unterschiedlichen Frequenzen gleich sein, weil die Stromschwerpunkte bei unterschiedlichen Frequenzen immer auf der Symmetrie-Achse des Rohres liegen. Durch Vergleich der gemessenen Magnetfeldwerte bei unterschiedlichen Frequenzen werden Defektstellen gefunden und lokalisiert. Hierzu ist die Abtastung des Magnetfeldes entlang des Rohres sequenziell durchzuführen. Dieses Verfahren ist unter den Namen "NoPig-Verfahren" bekannt (siehe http://www.finoag.com). Dieses Verfahren ist frei von vielen Nachteilen des Molch-Verfahrens, d.h. es gibt keine Begrenzungen wegen spezieller Anforderungen an den Bau der Rohrleitungen, etc.

Trotzdem hat das NoPig-Verfahren seine Nachteile. Im Fall von Stahlrohren, welche normalerweise aus ferritischen Stahllegierungen hergestellt sind, reicht es nicht, die Magnetfelder von zwei Strömen (einen mit der tiefen Frequenz, und den anderen mit der höheren Frequenz) zu messen und danach vergleichen. Wegen der hohen magnetischen Permeabilität des Stahls ist das Magnetfeld in Rohrwänden viel stärker als außerhalb des Rohres. Im Fall eines Defektes entsteht magnetischer Streufluss oberhalb der Defektstelle. Dabei passiert Folgendes: der magnetische Streufluss wirkt entgegen der Stromschwerpunktverschiebung. Im Extremfall ergeben sich gleiche Werte für die Magnetfelder bei tiefen und hohen Frequenzen trotz eines vorhandenen Defektes. Diese kompensierende Wirkung von beiden obengenannten Mechanismen ist von mehreren Faktoren abhängig, wie der magnetischen Permeabilität und der elektrischen Leitfähigkeit des Stahls, der geometrischen Form des Defektes, und führt dazu, dass die Empfindlichkeit des Verfahrens erheblich reduziert wird, und führt sogar bis zur vollen Unempfindlichkeit gegenüber einigen Defekten.

Der vorliegenden Erfindung liegt die Aufgabe zugrunde, ein Verfahren und eine Vorrichtung zur Erkennung von Ungleichmäßigkeiten in der Wandstärke ferromagnetischer Rohre anzugeben, mit dem berührungslos die Stellen am Rohr mit verringerter Wandstärke detektiert und definiert werden können, trotz des Umstandes, dass das Rohr aus einem ferritischen Stahl hergestellt ist.

Die Aufgabe wird erfindungsgemäß gelöst durch ein Prüfverfahren nach Anspruch 1 und eine Vorrichtung insbesondere zur Durchführung des Prüfverfahrens nach Anspruch 2.

Bei der Erfindung handelt es sich um ein zerstörungsfreies Prüfverfahren sowie eine entsprechende Prüfvorrichtung zur berührungslosen Erkennung von Ungleichmäßigkeiten in der Wandstärke von ferromagnetischen Rohren. Solche Ungleichmäßigkeiten werden vor allem durch Korrosion hervorgerufen. Aus diesem Grund ist die Erfindung besonders einzusetzen für die frühzeitige Erkennung von korrosionsverursachten Wandstärkeminderungen in Erdöl- und Gas-Pipelines, weil diese Pipelines vorwiegend aus ferritischem Stahl hergestellt sind. Das Prüfverfahren beruht darauf, dass ein elektrischer Strom bestehend aus mehreren harmonischen Komponenten durch das zu prüfende Rohr geleitet wird und das von ihm erzeugte Magnetfeld gemessen wird. Dabei wird das Spektrum dieses Stromes gemessen. Von den gemessenen Magnetfeldwerten wird auch das Spektrum erfasst. Ausgewertet wird das Verhältnis zwischen gleichen spektralen Komponenten des Stromes und des Magnetfeldes. Der Frequenzbereich der harmonischen Komponenten ist so ausgewählt, dass die niedrigste Frequenz der Eindringtiefe entspricht, welche mindestens etwa so groß ist, wie die nominale Wandstärke des Rohres, und die höchste Frequenz der Eindringtiefe entspricht, welche mindestens etwa so klein ist, wie die kritische Restwandstärke des Rohres. Unter kritischer Restwandstärke wird die minimal zulässige Restwandstärke an korrodierten Stellen verstanden. Da das Verhältnis Magnetfeld/Strom außerhalb des Rohres am Ort der Korrosion frequenzabhängig ist, wird diese Frequenzabhängigkeit aus dem Vergleich der spektralen Werten des Magnetfeldes und des Stromes festgestellt. Damit wird die Defektstelle erkannt. Im Fall des Rohrabschnitts ohne Defekt ist das Verhältnis Magnetfeld/Strom außerhalb des Rohres frequenzunabhängig. Die Prüfvorrichtung besteht aus zwei Modulen: einer stationären Stromquelle und einem mobilen Magnetfeldmessmodul. Beide Module sind transportabel.

Weitere Vorteile, Merkmale und Anwendungsmöglichkeiten der vorliegenden Erfindung ergeben sich aus der nachfolgenden Beschreibung von bevorzugten Ausführungsbeispielen in Verbindung mit den Zeichnungen.

Fig. 1a zeigt einen Rohrquerschnitt ohne Defekt und Magnetfeldlinien. Fig. 1b zeigt einen Rohrquerschnitt mit Defekt und Magnetfeldlinien.

Fig. 2 zeigt die Änderung der tangentialen Komponente des Magnetfeldes entlang der Achse Z für zwei Fälle: ohne und mit Defekt nach Fig. 1. Die vertikale Achse ist im logarithmischen Maßstab dargestellt.

Fig. 3 zeigt die Frequenzabhängigkeit des Verhältnis zwischen der tangentialen Komponente des Magnetfeldes außerhalb des Rohres und dem Strom durch das Rohr für die beiden Fälle von Fig. 1 (ohne und mit Defekt).

Fig. 4 zeigt die Form des Stromes durch das Rohr als Beispiel.

Fig. 5 zeigt als Beispiel das Spektrum des Stromes durch das Rohr.

Fig. 6 zeigt den schematischen Aufbau einer Prüfvorrichtung zur Durchführung des Prüfverfahrens gemäß der Erfindung.

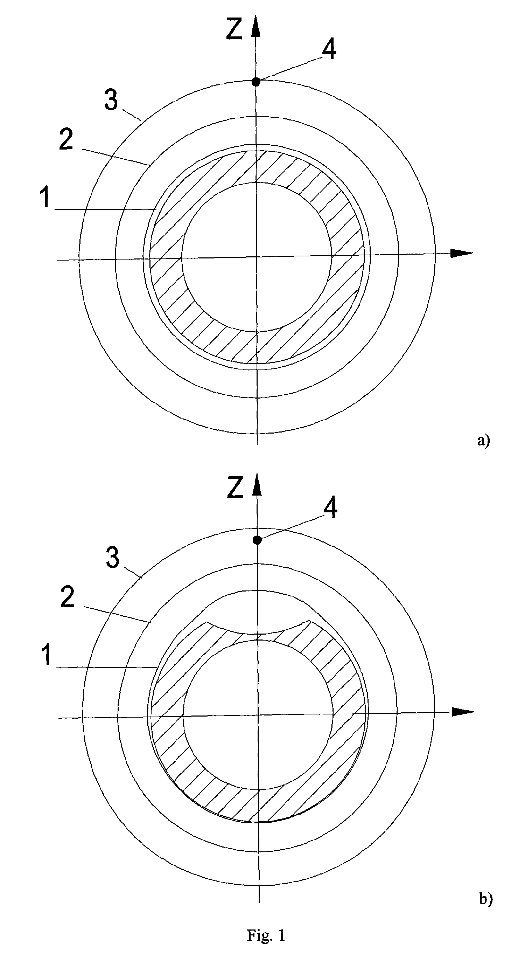

Bei der Prüfung wird ein elektrischer Strom bestehend aus mehreren harmonischen Komponenten durch das Rohr geleitet. Der Strom fließt in Rohrlängsrichtung. In Fig. 1 sind Querschnitte des Rohres für zwei unterschiedliche Fälle gezeigt. Auf den Bildern sind auch die numerisch berechneten Magnetfeldlinien dargestellt. Fig. 1a zeigt den Fall ohne Defekt für eine Frequenz aus dem Frequenzbereich der harmonischen Komponenten. Fig. 1b zeigt den Fall mit Defekt bei der gleichen Frequenz. Im Fall ohne Defekt sind die Magnetfeldlinien rund und konzentrisch (Fig. 1a) - d. h. unabhängig von der Frequenz. Im Fall eines Defektes haben die Magnetfeldlinien eine deutliche Abweichung von der runden Form. Diese Abweichung ist abhängig von der Defektform, von der Rohrmaterialeigenschaften (Permeabilität $\mu$ und Leitfähigkeit $\sigma$) und von der Frequenz $f$. Hierbei spielen zwei unterschiedlichen physikalischen Mechanismen eine Rolle: der Skin-Effekt und die Magnetfluss-Streuung. Der Skin-Effekt ist für die Stromverteilung in der radialen Richtung verantwortlich. Bei höheren Frequenzen wird der Strom zur Oberfläche des Rohres gedrückt. Ein Parameter zur Definition des Skin-Effekts ist die Eindringtiefe $\delta$, welche die Tiefe (von der Oberfläche gemessen) im Material charakterisiert, bei der die Stromdichte um den e-ten Teil geschwächt wird:

$$\delta = 2/(2\mu\mu_o\sigma\omega)^{1/2}. \qquad (1)$$

Hier ist $\mu_o$ die magnetische Permeabilität des Vakuums, und $\omega = 2\pi f$ ist die Kreisfrequenz. Die Magnetfluss-Streuung bedeutet, dass die Magnetfeldlinien aus dem Rohr dort nach außen gedrückt werden, wo der Querschnitt nicht mehr ringförmig und der magnetische Widerstand erhöht ist. Beide Einflüsse gelten für die Defektstellen. Die in Fig. 1a und Fig. 1b dargestellten Magnetfeldlinien 1 haben in beiden Fällen (ohne und mit Defekt) die gleichen Magnetfeldwerte. Dasselbe gilt für die Magnetfeldlinien 2 und 3. Die magnetische Flussdichte $B$ für diesen Linien hat folgende Zusammenhang:

$$B_1 > B_2 > B_3. \qquad (2)$$

Die Indizes bedeuten die Nummern der Magnetfeldlinien. In einem Messpunkt 4 außerhalb des Rohres wird z.B. die tangentiale Komponente $B_t$ vom Magnetfeld gemessen. Für das Beispiel, dargestellt in Fig. 1, d.h., welches den Fall mit Defekt darstellt (Fig.

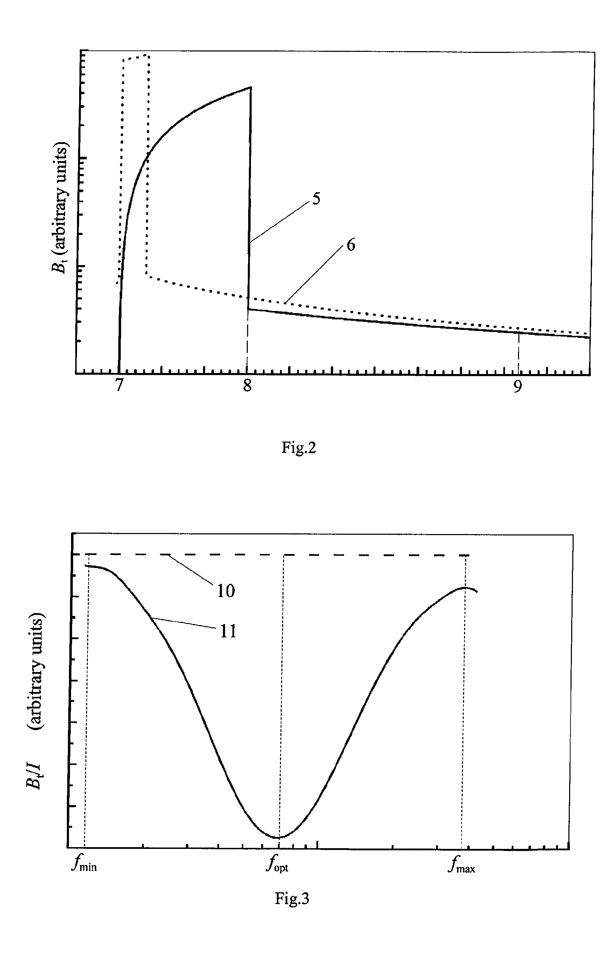

1b), ist der gemessene Feldwert etwas höher, als im Fall ohne Defekt. Dies illustriert die Grafik in Fig. 2. Die Achse $B_t$ ist im logarithmischen Maßstab dargestellt.

Die Änderung der tangentialen Komponente $B_t$ des Magnetfeldes in der Wand und außerhalb des Rohres entlang der Achse $Z$ in Fig. 1 ist in Fig. 2 als Ergebnis einer numerischen Berechnung dargestellt. Die Kurve 5 entspricht dem Fall ohne Defekt, und die Kurve 6 - dem Fall mit Defekt. Die Punkte 7 und 8 auf der Z-Achse entsprechen dem inneren bzw. äußeren Radius des Rohres. Der Punkt 9 entspricht dem Messpunkt 4 in Fig. 1. Die Magnetfeldwerte von den Kurven 5 und 6 beim Punkt 9 sind deutlich unterschiedlich. Dadurch kann eine Defektstelle identifiziert werden.

Das Magnetfeld hängt direkt vom Strom ab. Aus diesem Grund ist es sinnvoll, nur das Verhältnis zwischen den Feld- und Stromwerten zu betrachten. Ein numerisch berechnetes Beispiel der Frequenzabhängigkeit des Verhältnisses zwischen der tangentialer Komponente $B_t$ des Magnetfeldes außerhalb des Rohres und dem Strom $I$, der durch das Rohr fließt, ist für beide Fälle, gezeigt in Fig. 1 (ohne und mit Defekt), in Fig. 3 dargestellt. Als $f_{min}$ bzw. $f_{max}$ sind die minimale bzw. maximale Frequenzen des Frequenzbereiches von der harmonischen Stromkomponenten gezeigt. Die Linie 10 entspricht dem Fall ohne Defekt, und die Kurve 11 - dem Fall mit Defekt. Man sieht, dass trotz der fast identischen Werte für beide Fälle bei $f_{min}$ und $f_{max}$, mindestens eine optimale Frequenz $f_{opt}$ existiert, bei welcher ein deutlicher Unterschied zwischen den Fällen ohne und mit Defekt zu sehen ist. Wenn der Prüfstrom mehrere harmonische Komponenten enthält, deren Frequenzen im Bereich von $f_{min}$ bis $f_{max}$ verteilt sind, erlaubt dies bei der Messung, den ganzen Frequenzgang des Verhältnisses $B_t/I$ zu erfassen und damit eine Defektstelle zu finden. Der Charakter des Frequenzganges ist individuell für jede Art des Defektes. Damit können die Defekte auch unterschieden werden.

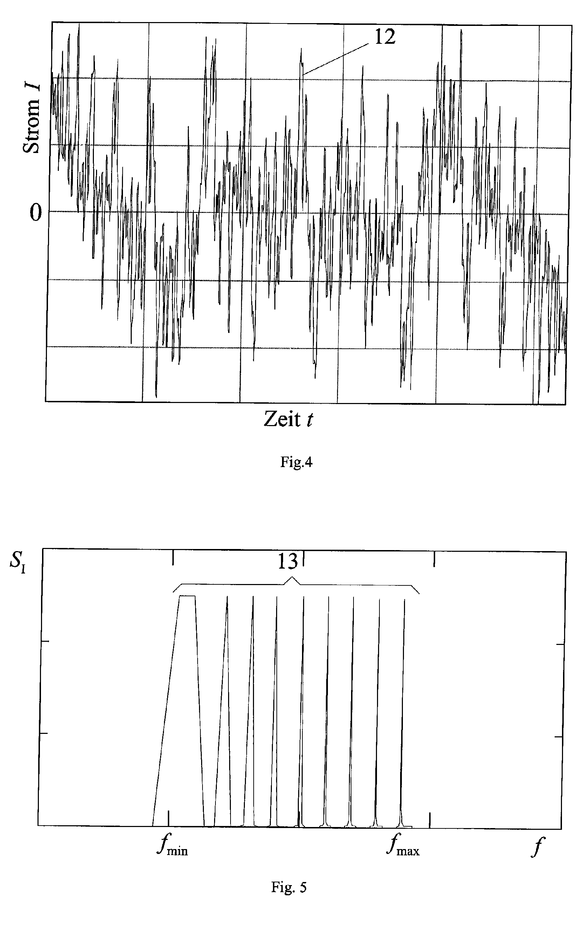

Ein Beispiel für die Form des Prüfstromes $I$ mit mehreren harmonischen Komponenten ist in Fig. 4 gezeigt. Der Stromverlauf 12 ist hier als der Momentanwert über die Zeit $t$ abgebildet. Das Frequenzspektrum $S_I$ des Stromes ist in Fig. 5 dargestellt. Es besteht aus mehreren spektralen Linien 13, entsprechend den harmonischen Komponenten im Frequenzbereich von $f_{min}$ bis $f_{max}$.

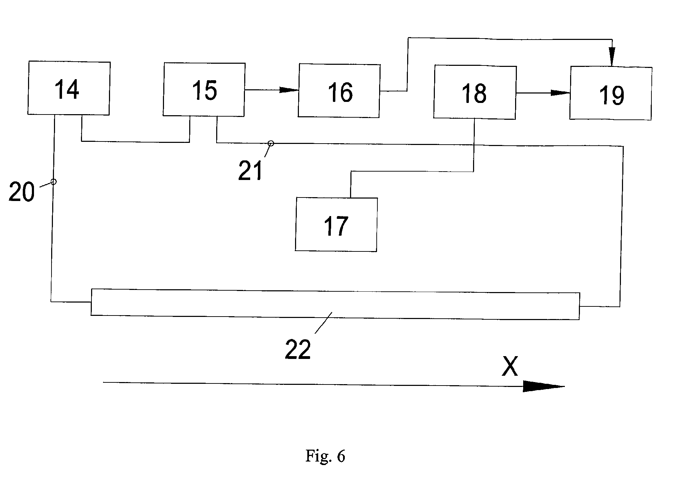

Fig. 6 zeigt den schematischen Aufbau der Prüfvorrichtung. Sie besteht aus der Stromquelle 14, der Strommesseinrichtung 15, dem Stromwerten-Spektrumanalysator 16, Magnetfeldsensor(en) 17, dem Magnetfeldwerte-Spektrumanalysator 18 und Auswertungseinrichtung 19. An den Ausgängen 20 und 21 der Prüfvorrichtung ist die zu prüfende Rohrleitung 22 angeschlossen. Bei der Prüfung wird/werden Magnetfeldsensor(en) entlang des Rohres in der $X$-Richtung bewegt und die Magnetfeldwerte aufgenommen. Synchron hierzu werden die Stromwerte aufgenommen. Nach der Spektralanalyse von beiden Gruppen von Werten werden die Verhältnisse $B_t/I$ für jede harmonische Komponente gebildet und analysiert. Bei einem glatten Frequenzverlauf des Verhältnis $B_t/I$ handelt es sich um Stellen ohne Defekt, bei nicht glattem Vrlauf mit Extrema - um Stellen mit Defekt. Eine mehr detaillierte Analyse des Defekts anhand des Frequenzverlaufs ist möglich.

**Patentansprüche**

1. Prüfverfahren zur Erkennung von Ungleichmäßigkeiten in der Wandstärke ferromagnetischen Rohren , *gekennzeichnet dadurch,* **dass** ein elektrischer Strom aufweisend mehrere harmonische Komponenten durch das zu prüfende Rohr geleitet wird und das von ihm erzeugte Magnetfeld außerhalb des Rohres gemessen wird, wobei das Spektrum des Stromes gemessen wird, und von dem gemessenen Magnetfeld das Spektrum erfasst wird, wobei die Verhältnisse zwischen gleichen spektralen Komponenten des Stromes und des Magnetfeldes gewonnen und ausgewertet werden.

2. Prüfvorrichtung, insbesondere zur Durchführung des Prüfverfahrens nach Anspruch 1, *aufweisend* eine Stromquelle zur Speisung des zu prüfenden Rohres mit einem Strom aufweisend mehrere harmonische Komponenten, eine Strommesseinrichtung zur Messung und Aufnahme der momentanen Stromwerte, eine Stromspektrum-Auswertungseinrichtung zur Erfassung der harmonischen Komponenten des Stromes, mindestens einen Magnetfeldsensor zur Messung und Aufnahme der momentanen Werte des durch den Strom erzeugten Magnetfeldes außerhalb des Rohres, eine Magnetfeldspektrum-Auswertungseinrichtung zur Erfassung der harmonischen Komponenten des Magnetfeldes, und eine Auswertungseinrichtung zum Gewinnen und Analysieren der spektralen Verhältniswerte von Magnetfeld und Strom.

Fig. 1

Fig.2

Fig.3

Fig.4

Fig. 5

Fig. 6

**EP 1 357 380 A1**

**Europäisches Patentamt**

**EUROPÄISCHER RECHERCHENBERICHT**

Nummer der Anmeldung

EP 02 00 9151

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | DE 198 19 066 A (F I T MESSTECHNIK GMBH) 11. November 1999 (1999-11-11) * das ganze Dokument * --- | 1,2 | G01N27/83 |
| A | DE 34 24 308 A (NIPPON KOKAN KK) 17. Januar 1985 (1985-01-17) * Zusammenfassung * * Seite 7, Zeile 21-33 * --- | 1,2 | |
| A | US 4 982 158 A (NAKATA ROY ET AL) 1. Januar 1991 (1991-01-01) * Zusammenfassung * --- | 1,2 | |
| A | US 5 126 654 A (MURPHY JOHN C ET AL) 30. Juni 1992 (1992-06-30) * Spalte 13, Zeile 52 - Spalte 14, Zeile 3 * ----- | 1,2 | |

| | | | RECHERCHIERTE SACHGEBIETE (Int.Cl.7) |
|---|---|---|---|
| | | | G01N |

Der vorliegende Recherchenbericht wurde für alle Patentansprüche erstellt

| Recherchenort | Abschlußdatum der Recherche | Prüfer |
|---|---|---|
| MÜNCHEN | 8. Oktober 2002 | Meyer, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**

EP 02 00 9151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2002

| Im Recherchenbericht angeführtes Patentdokument | Datum der Veröffentlichung | Mitglied(er) der Patentfamilie | | Datum der Veröffentlichung |
|---|---|---|---|---|
| DE 19819066 A | 11-11-1999 | DE | 19819066 A1 | 11-11-1999 |
| | | AU | 4135899 A | 16-11-1999 |
| | | BR | 9910010 A | 16-01-2001 |
| | | CA | 2328204 A1 | 04-11-1999 |
| | | WO | 9956123 A1 | 04-11-1999 |
| | | EP | 1075658 A1 | 14-02-2001 |
| DE 3424308 A | 17-01-1985 | JP | 1764725 C | 28-05-1993 |
| | | JP | 4057961 B | 16-09-1992 |
| | | JP | 60013205 A | 23-01-1985 |
| | | DE | 3424308 A1 | 17-01-1985 |
| | | FR | 2548785 A1 | 11-01-1985 |
| | | GB | 2143331 A | 06-02-1985 |
| US 4982158 A | 01-01-1991 | EP | 0422131 A1 | 17-04-1991 |
| | | JP | 3505375 T | 21-11-1991 |
| | | WO | 8912833 A1 | 28-12-1989 |
| US 5126654 A | 30-06-1992 | KEINE | | |

EPO FORM P0461

Für nähere Einzelheiten zu diesem Anhang : siehe Amtsblatt des Europäischen Patentamts, Nr.12/82